# EUROPÄISCHE PATENTSCHRIFT

(11) **EP 1 732 175 B1**
(45) Veröffentlichungstag und Bekanntmachung des Hinweises auf die Patenterteilung: **07.05.2008**
(21) Anmeldenummer: 06010299.3
(22) Anmeldetag: 18.05.2006
(51) Int. Cl.: H01R 13/508

(54) **Mit einem Deckel verschliessbares Winkelsteckverbindergehäuse**
Angular connector housing with cover
Boîtier de connecteur angulaire avec couvercle

(30) Priorität: 08.06.2005 DE 102005026401
(43) Veröffentlichungstag der Anmeldung: 13.12.2006
(73) Patentinhaber: Lapp Engineering & Co, 6300 Zug (CH)
(72) Erfinder: Bihrer, Markus, 75382 Althengstett (DE); Schulz, Udo, 70565 Stuttgart (DE); Schöllhammer, Reiner, 73230 Kirchheim/Teck (DE); Villiger, Beat, 5734 Reinach (AG) (CH)
(74) Vertreter: Schmidt, Steffen J.

(56) Entgegenhaltungen:
- EP-A- 1 122 833
- EP-A2- 0 615 314
- WO-A-03/061077
- DE-A1- 19 520 544
- DE-A1- 19 942 921

## Beschreibung

### Hintergrund der Erfindung

Die vorliegende Erfindung betrifft ein Winkelsteckverbindergehäuse mit einer Öffnung, die durch einen einrastenden Deckel verschließbar ist. Insbesondere betrifft die Erfindung ein Winkelsteckverbindergehäuse mit den Merkmalen des Oberbegriffs von Anspruch 1.

Winkelsteckverbindergehäuse werden zum Anschluss an Aggregate verwendet und umfassen einen flanschartigen ersten Schenkel, der an dem Aggregat befestigt ist, und einen zum ersten Schenkel winklig angeordneten zweiten Schenkel, der rohrartig ausgebildet sein kann.

### Stand der Technik

DE 298 13 455 U1 offenbart einen Winkelsteckverbinder mit einer haubenartigen Abdeckung, die an den Winkelsteckverbinder geschraubt ist. Eine Schraubbefestigung erfordert einen höheren Zeitaufwand beim Anbringen der Abdeckung und ist vibrationsempfindlich. Ferner kann eine Schraube beim Anbringen der Abdeckung verloren gehen, und das erforderliche Anzugsmoment der Schraube kann nicht mit einfachen Mitteln sichergestellt werden.

DE 195 20 544 A1 offenbart einen Deckel eines Winkelsteckverbindergehäuses, der mittels integral mit dem Deckelrand ausgebildeter Ringstegen oder dergleichen mit dem Winkelsteckverbindergehäuse verrastet. Diese Art der Verrastung unterliegt einem Verschleiß, und ferner können die an einem Dichtelement erforderlichen Kräfte zum Abdichten des Winkelsteckverbindergehäuses nicht dauerhaft sichergestellt werden.

DE 199 42 921 A1 offenbart ein Winkelsteckverbindergehäuse nach dem Oberbegriff des Anspruchs 1 mit zwei Schenkeln und einer durch einen Deckel verschließbaren Öffnung, wobei der Deckel ein seitlich ausgebildetes Federelement aufweist, das in der geschlossenen Stellung des Deckels außerhalb des Deckels und eines der zwei Schenkel vorgesehen ist, so dass es einer Verschmutzung ausgesetzt ist.

DE 199 42 921 A1 beschreibt einen Winkelsteckverbinder mit einem Deckel. Der Deckel wird mit einer Rastverriegelung an dem Stecker angebracht. Von dem Deckel steht senkrecht ein Lappen mit einer Rastöffnung ab, die mit einer Rastnase am Gehäuse verrastet. Sowohl die Rastöffnung als auch die Rastnase liegen im eingerasteten Zustand offen an der Gehäuseoberfläche.

EP 1 122 833 A1 beschreibt ein dreiteiliges Verbindungsgehäuse. Ein erster Gehäuseteil weist dabei ein Metallfederelement auf. Beim Zusammenführen des ersten Gehäuseteils mit einem zweiten Gehäuseteil schnappt ein Abschnitt des Metallfederelements in eine Aussparung am zweiten Gehäuseteil ein. Ein dritter Gehäuseteil weist eine Nase auf. Beim Zusammenführen des dritten Gehäuseteils mit dem ersten und dem zweiten Gehäuseteil wird die Nase des dritten Gehäuseteils so hinter dem Metallfederelement im Inneren des Verbindungsgehäuses platziert, dass die Nase ein Einfedern des Metallfederelements verhindert und die Verbindung zwischen dem ersten und dem zweiten Gehäuseteil sichert. Der erste und der dritte Gehäuseteil werden durch zwei Schrauben miteinander verbunden.

EP 0 615 314 A2 beschreibt eine Schutzkappe für einen elektrischen Verbinder. Die Schutzkappe weist Abschnitte mit Rastvorsprüngen auf. Die Rastvorsprünge greifen in Rastnuten am Verbinder ein. Sowohl die Rastvorsprünge als auch die Rastnuten liegen im gekoppelten Zustand offen an der Gehäuseoberfläche.

WO 03/061077 A1 beschreibt eine Steckdose mit einem Klappdeckel. In dem Scharnier, das den Klappdeckel mit der Steckdose verbindet, ist eine Torsionsfeder angebracht, die den Klappdeckel in Richtung der Öffnung der Steckdose drückt. Damit wird ein versehentliches Öffnen der Steckdose verhindert.

### Aufgabe der Erfindung

Es ist eine Aufgabe der Erfindung, ein Winkelsteckverbindergehäuse mit einer Öffnung und einem Deckel zu schaffen, wobei der Deckel verschleißarm mit dem Winkelsteckverbindergehäuse verrastet ist.

### Erfindungsgemäße Lösung

Die Aufgabe wird durch ein Winkelsteckverbindergehäuse nach Anspruch 1 gelöst.

Die ersten Rastmittel können durch einen Rastvorsprung ausgebildet sein, und die zweiten Rastmittel können durch einen Bereich des Federelements, beispielsweise einer Kante des Federelements, ausgebildet sein. In der geschlossenen Stellung des Deckels können die ersten und zweiten Rastmittel derart zusammenwirken, dass sie den Deckel und das Gehäuse miteinander verrasten. Während des Aufsetzens des Deckels kann das Federelement, beispielsweise durch den Rastvorsprung, zusammengedrückt werden, d. h., das Federelement befindet sich in einem Zustand höherer Spannung. In der geschlossenen Stellung des Deckels, d.h. der Raststellung, kann sich das Federelement in einem Zustand niedrigerer Spannung befinden. Zum Entrasten des Deckels kann das Federelement wieder gespannt werden.

### Vorteile, Ausgestaltungen und Weiterbildungen der Erfindung

Das Führungselement und das komplementäre Führungselement ermöglichen ein sicheres Führen des Deckels beim Schließen, so dass dieser nicht verkanten kann, wodurch sichergestellt ist, dass die Öffnung sicher geschlossen ist. Da sich das Federelement zwischen dem Deckel und einem der Schenkel befindet, ist es vor Verschmutzung geschützt. Das separate Federelement ermöglicht eine relativ stabile Auslegung des Deckels und/oder der Schenkel, was den Verschleiß mindert. Das Federelement kann auch integral mit dem Deckel oder einem der Schenkel ausgebildet sein. Dabei ist der Ausdruck "Federelement" dahingehend zu verstehen, dass der Deckel bzw. einer der Schenkel einen als Feder wirkenden Bereich hat.

Das Winkelsteckverbindergehäuse kann ein erstes Dichtelement, das an mindestens einem der Schenkel angeordnet ist, und ein zweites Dichtelement, das am Deckel angeordnet ist, umfassen, wobei das Führungselement und das komplementäre Führungselement derart zusammenwirken, dass das erste Dichtelement und das zweite Dichtelement die Öffnung in der geschlossenen Stellung des Deckels abdichten.

Das erste Dichtelement kann selbst eine Dichtfunktion bewirken. Ferner kann am Winkelsteckverbindergehäuse ein Aufnahmeelement zum Aufnehmen des ersten Dichtelements, beispielsweise eines O-Rings, ausgebildet sein. Das Aufnahmeelement kann als Hinterscheidung ausgebildet sein. Das zweite Dichtelement kann als Dichtfläche ausgebildet sein.

Die Dichtelemente können sich in der geschlossenen Stellung des Deckels berühren oder können auch als Labyrinth-Dichtungen ausgebildet sein. Die Dichtelemente können einen Schutz gegenüber mindestens einer Umgebungseinflussgröße bereitstellen. Die Dichtelemente können auch derart ausgebildet sein, dass sie nur einen Schutz vor Verschmutzung bereitstellen.

Bei dem Winkelsteckverbindergehäuse kann das erste Dichtelement integral mit mindestens einem der Schenkel und/oder das zweite Dichtelement kann integral mit dem Deckel ausgebildet sein. Dadurch kann sichergestellt werden, dass sich keines der Dichtelemente beim Schließen des Deckels verrutscht oder von dem Winkelsteckverbindergehäuse verloren geht.

Bei dem Winkelsteckverbindergehäuse kann mindestens einer der Schenkel eine Mehrzahl von Führungselementen umfassen und der Deckel kann eine Mehrzahl von komplementären Führungselementen umfassen, wobei die Mehrzahl von Führungselementen mit der Mehrzahl von komplementären Führungselementen zusammenwirkt, um den Deckel beim Schließen zu führen. Damit wird der Deckel beim Schließen besonders gut geführt. Die Mehrzahl von Führungselementen und die Mehrzahl von komplementären Führungselementen können derart angeordnet sein, dass eine Fehlmontage und eine statische Überbestimmung des Deckels vermieden werden.

Bei dem Winkelsteckverbindergehäuse kann das Federelement außerhalb des durch das erste Dichtelement und das zweite Dichtelement definierten Bereichs vorgesehen sein. Da das Federelement zwischen dem Deckel und mindestens einem der Schenkel angeordnet ist, ist es weitgehend gegen Verschmutzung geschützt.

Da die Betätigungsöffnung zwischen dem Deckel und einem der Schenkel vorgesehen ist, ist das Federelement weitgehend gegen Verschmutzung geschützt und für ein Betätigungswerkzeug, beispielsweise einen Schraubendreher, durch die Betätigungsöffnung zugänglich, um die Rastmittel zu entrasten. Weder zum Verrasten noch zum Entrasten der ersten und der zweiten Rastmittel ist ein Spezialwerkzeug erforderlich.

Bei dem Winkelsteckverbindergehäuse kann sich das mindestens eine Führungselement entlang eines der Schenkel in dessen Längsrichtung erstrecken. In diesem Fall werden eine besonders gute Führung des Deckels während des Schließvorgangs und ein stabiles Haltern des Deckels in der geschlossenen Stellung erreicht.

Bei dem Winkelsteckverbindergehäuse können das mindestens eine Führungselement und das mindestens eine komplementäre Führungselement innerhalb des durch das erste Dichtelement und das zweite Dichtelement definierten Bereichs vorgesehen sein.

Dadurch ist sichergestellt, dass das mindestens eine Führungselement und das mindestens eine komplementäre Führungselement vor Verschmutzung geschützt sind und die Führung bezüglich der Dichtelemente verbessert ist. Ferner erhält man bei einem Winkelsteckverbindergehäuse, bei dem die Öffnung an dem abknickenden Bereich zwischen den Schenkeln ausgebildet ist, eine besonders platzsparende Anordnung.

Bei dem Winkelsteckverbindergehäuse kann das mindestens eine Führungselement innerhalb des durch die Öffnung definierten Bereichs ausgebildet sein, so dass sich in der geschlossenen Stellung des Deckels das mindestens eine komplementäre Führungselement durch die Öffnung erstreckt. Dadurch wird eine platzsparende Anordnung erreicht.

Bei dem Winkelsteckverbindergehäuse kann vorgesehen sein, dass das mindestens eine komplementäre Führungselement nicht mit der Öffnung zusammenwirkt. Somit entsteht an der Öffnung und dem gegebenenfalls daran angebrachten Dichtelement kein Verschleiß. Ferner kann eine statische Überbestimmung vermieden werden, und es sind keine engen Herstellungstoleranzen erforderlich. Falls die komplementären Führungselemente mit der Öffnung zusammenwirken, sind enge Herstellungstoleranzen erforderlich, um einerseits eine gute Führung sicherzustellen und andererseits eine statische Überbestimmung und/oder ein Klemmen zu vermeiden.

Bei dem Winkelsteckverbindergehäuse kann das mindestens eine Führungselement als Führungsnut ausgebildet sein und das mindestens eine komplementäre Führungselement als Führungssteg ausgebildet sein. Die Führungsstege und Führungsnuten können derart angeordnet sein, dass eine Fehlmontage und eine statische Überbestimmung des Deckels vermieden werden.

Bei dem Winkelsteckverbindergehäuse kann sich die Öffnung im Übergangsbereich vom ersten Schenkel zum zweiten Schenkel befinden.

Bei dem Winkelsteckverbindergehäuse kann die Öffnung in einem zwischen den Schenkeln im Längsschnitt des Winkelsteckverbindergehäuses schräg verlaufenden Bereich gebildet sein. Typischerweise befindet sich der schräg verlaufende Bereich unter einem Winkel von etwa 45° zu einem der Schenkel. Der schräg verlaufende Bereich kann auch ein Bereich mindestens eines der beiden Schenkel sein.

Bei dem Winkelsteckverbindergehäuse kann sich das mindestens eine Führungselement im Innern eines der Schenkel in dessen Längsrichtung erstrecken. Dadurch wird eine platzsparende Anordnung mit guten Führungseigenschaften erreicht.

Bei dem Winkelsteckverbindergehäuse können die Führungselemente integral mit dem Innenumfang mindestens eines der Schenkel ausgebildet sein. Die Führungselemente können beispielsweise als Anlagebereiche oder Anlagelinien am Innendurchmesser mindestens eines der Schenkel ausgebildet sein. Bei dieser Ausgestaltung sind zum Bilden der Führungselemente keine separaten Aussparungen erforderlich. Ferner eignet sich diese Ausgestaltung besonders, falls mindestens drei komplementäre Führungselemente vorgesehen sind. Sie kann aber auch angewendet werden, falls beispielsweise ein U-förmiges oder rechteckiges komplementäres Führungselement vorgesehen ist.

Bei dem Winkelsteckverbindergehäuse kann das Federelement einen ersten bogenförmigen Abschnitt und einen zweiten bogenförmigen Abschnitt umfassen, die je in der Längsrichtung des Federelements ausgebildet sind und an ihren Bogenenden durch eine Biegung derart verbunden sind, dass das Federelement in der Querrichtung ein V-förmiges Profil aufweist.

Durch diese Ausgestaltung des Federelements wird eine hohe Federkraft in der Querrichtung bei geringen Abmessungen in der Querrichtung erreicht.

Bei dem Winkelsteckverbindergehäuse kann ein Betätigungsbereich des Federelements zwischen den Bogenenden eines der bogenförmigen Abschnitte angeordnet sein.

Bei dem Winkelsteckverbindergehäuse kann das Federelement an einem der bogenförmigen Abschnitte in Bogenaußenrichtung einen geraden Bereich umfassen, an dem die zweiten Rastmittel und/oder der Betätigungsbereich ausgebildet sind.

Das Winkelsteckverbindergehäuse kann derart ausgebildet sein, dass durch Drücken auf den Betätigungsbereich des Federelements die ersten Rastmittel und die zweiten Rastmittel voneinander gelöst werden.

Dadurch können die ersten Rastmittel und die zweiten Rastmittel mittels eines einfachen Betätigungswerkzeugs, beispielsweise eines Schraubendrehers, voneinander gelöst werden, und es ist kein Spezialwerkzeug erforderlich. Ferner muss zum Lösen weder der Deckel noch einer der Schenkel elastisch verformt werden.

Bei dem Winkelsteckverbindergehäuse kann im geschlossenen Zustand des Deckels der innere Bereich der bogenförmigen Abschnitte des Federelements um mindestens einen Schenkel angeordnet sein.

Dadurch ergibt sich eine besonders platzsparende Anordnung bei einer hohen Federkraft in der Querrichtung des Federelements. Je nach Ausgestaltung des Federelements kann sich ein langer Federweg ergeben.

Bei dem Winkelsteckverbindergehäuse kann in der geschlossenen Stellung des Deckels das erste Dichtelement mit dem zweiten Dichtelement derart zusammenwirken, dass die Öffnung zumindest staubdicht abgedichtet ist.

Die Aufgabe der Erfindung wird auch durch ein Federelement für eine Rastverbindung bzw. ein Rastfederelement gelöst, das einen ersten bogenförmigen Abschnitt und einen zweiten bogenförmigen Abschnitt umfasst, die je in der Längsrichtung des Federelements ausgebildet sind und an ihren Bogenenden durch eine Biegung derart verbunden sind, dass das Federelement in der Querrichtung ein V-förmiges Profil aufweist.

Durch diese Ausgestaltung des Federelements wird eine hohe Federkraft in der Querrichtung bei geringen Abmessungen in der Querrichtung erreicht. Dieses Federelement eignet sich insbesondere zur Verwendung bei flanschartigen oder rohrartigen Bauteilen, da es platzsparend an deren Außenseite angeordnet werden kann. Das Federelement kann beispielsweise dadurch hergestellt werden, dass eine Kreisringscheibe oder eine ovale Ringscheibe gebogen wird.

Bei dem Federelement kann ein Betätigungsbereich zwischen den Bogenenden eines der bogenförmigen Abschnitte angeordnet sein, der dazu dient, das Federelement zusammenzudrücken.

Bei dem Federelement können zwischen den Bogenenden eines der bogenförmigen Abschnitte Rastmittel angeordnet sein.

Das Federelement kann an einem der bogenförmigen Abschnitte in Bogenaußenrichtung einen geraden Bereich umfassen, an dem die Rastmittel und/oder der Betätigungsbereich ausgebildet sind.

### Kurzbeschreibung der Zeichnungen

Nachfolgend wird ein Ausführungsbeispiel der Erfindung anhand von Zeichnungen detaillierter beschrieben. Es stellen dar:
Figur 1 eine erste Explosionsansicht eines erfindungsgemäßen Winkelsteckverbindergehäuses;
Figur 2 eine perspektivische Ansicht des Deckels des Winkelsteckverbindergehäuses;
Figur 3 eine Schnittansicht des Winkelsteckverbindergehäuses, wobei sich der Deckel in der geschlossenen Stellung befindet;
Figur 4 eine zweite Explosionsansicht des Winkelsteckverbindergehäuses; und
Figur 5 eine perspektivische Ansicht eines erfindungsgemäßen Federelements.

### Detaillierte Beschreibung erfindungsgemäßer Ausführungsformen

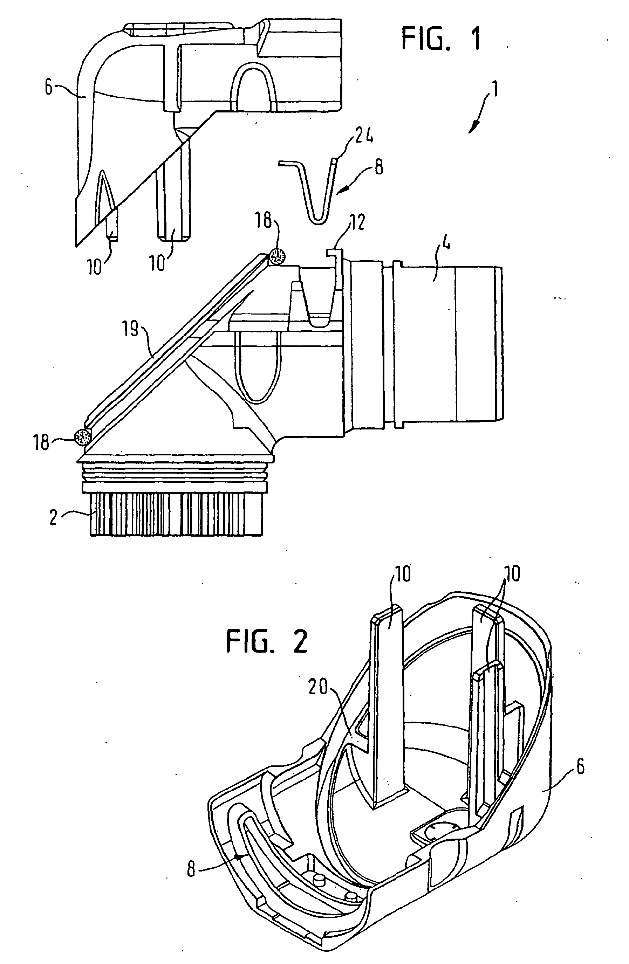

Figuren 1, 3 und 4 zeigen verschiedene Ansichten eines erfindungsgemäßen Winkelsteckverbindergehäuses 1 mit einem ersten Schenkel 2, einem zweiten Schenkel 4, einem Deckel 6, einem Federelement 8, und einer Öffnung 14, die in einem unter einem Winkel von etwa 45° schräg verlaufenden Bereich des ersten Schenkel 2 und des zweiten Schenkel 4 bzw. zwischen dem ersten Schenkel 2 und dem zweiten Schenkel 4 gebildet ist. Das Winkelsteckverbindergehäuse 1 umfasst an seinem zweiten Schenkel 4 erste Rastmittel 12, die als Rastvorsprung ausgebildet sind. Ferner umfasst das Winkelsteckverbindergehäuse 1 an der Öffnung 14 ein an einer Dichtelementaufnahme 19 angeordnetes erstes Dichtelement 18, das die Öffnung 14 radial umgibt und als O-Ring ausgebildet ist. Das erste Dichtelement 18 kann auch mit mindestens einem der Schenkel 2, 4 integral ausgebildet sein. Der erste Schenkel 2 umfasst drei (nicht gezeigte) Führungselemente, die sich als Führungsnuten im Inneren des ersten Schenkels 2 in dessen Längsrichtung in dem durch die Öffnung 14 definierten Bereich erstrecken. Dadurch kann eine große Länge der Führungselemente erreicht werden, was die Führung verbessert, und gleichzeitig ist diese Anordnung platzsparend und die Führungselemente sind vor Verschmutzung geschützt. Ferner kann durch die drei Führungsnuten eine Fehlmontage des Deckels 6 verhindert werden. Es ist auch möglich, ein einziges Führungselement zu verwenden, das den Deckel in zwei Freiheitsgraden sicher führt, beispielsweise ein U-förmiges, ein V-förmiges, ein T-förmiges oder ein mit einem entsprechend großen Querschnitt ausgelegtes rechteckiges Führungselement. Bei dieser Ausführungsform kann der Deckel von oben auf das Winkelsteckverbindergehäuse gedrückt werden. Aufgrund der ergonomischen Anordnung kann der Verwender des Winkelsteckverbindergehäuses beim Schließen des Deckels sein eigenes Körpergewicht einsetzen. Folglich ist nur ein geringer Krafteinsatz seitens des Verwenders erforderlich.

Der in Figur 2 gezeigte Deckel 6 umfasst ein an seiner Unterseite angeordnetes Federelement 8, drei als Führungsstege ausgebildete komplementäre Führungselemente 10 und ein als Einführschräge integral mit dem Deckel 6 ausgebildetes zweites Dichtelement 20. Es kann jedoch auch ein separates Dichtelement, beispielsweise ein O-Ring, am Deckel 6 vorgesehen sein. Da das Federelement zwischen dem Deckel und mindestens einem der Schenkel geschützt angeordnet ist, besteht nur eine geringe Verletzungsgefahr.

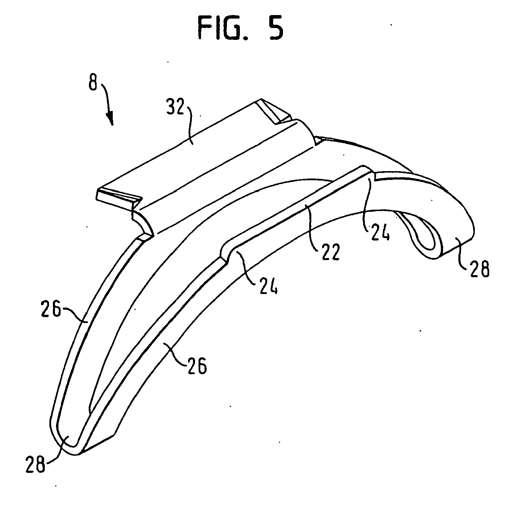

Das in Figur 5 dargestellte erfindungsgemäße Federelement 8 umfasst einen ersten bogenförmigen Abschnitt 26 und einen zweiten bogenförmigen Abschnitt 26, die je in der Längsrichtung des Federelements 8 ausgebildet sind und an ihren Bogenenden durch eine Biegung 28 derart verbunden sind, dass das Federelement 8 in Querrichtung ein V-förmiges Profil aufweist. Der erste bogenförmige Abschnitt 26 umfasst einen in Bogenaußenrichtung geraden Bereich, der die zweiten Rastmittel 24 und den Betätigungsbereich 22 umfasst. Der zweite bogenförmige Abschnitt 26 umfasst einen Befestigungsbereich 32, mit dem das Federelement 8 an einem Bauteil, beispielsweise dem Deckel 6, angebracht werden kann. Wie zuvor erwähnt wurde, kann das Federelement 8 beispielsweise dadurch gebildet werden, dass eine Kreisringscheibe oder eine ovale Ringscheibe gebogen wird. Bei einer Ausführungsform umfasst ein bogenförmiger Abschnitt 26 des Federelements 8 ein Winkelsegment von etwa 180°, aber es sind auch andere Winkelsegmente denkbar. Dieses Federelement eignet sich insbesondere zur Verwendung bei einem flanschartigen oder rohrartigen Bauteil, da es platzsparend um dessen Umfangsbereich angeordnet werden kann.

Das Federelement 8 muss in seiner Längsrichtung nicht notwendigerweise eine runde Bogenform aufweisen, es könnte je nach Einsatzgebiet auch an seinem Innenumfang und/oder Außenumfang rechteckig ausgebildet sein, und könnte demgemäß durch Biegen eines rechteckigen Rings gebildet sein.

Wird der Deckel 6 auf das Winkelsteckverbindergehäuse 1 gesteckt, wirken die drei Führungsstege 10 mit den (nicht gezeigten) Führungsnuten im Inneren des ersten Schenkels 2 derart zusammen, dass sie den Deckel 6 relativ genau führen, so dass in der geschlossenen Stellung das erste Dichtelement 18 und das zweite Dichtelement 20 das Winkelsteckverbindergehäuse abschließen und die ersten Rastmittel 12 und die zweiten Rastmittel 24 den Deckel 6 in der geschlossenen Stellung halten. Es kann ein staubdichtes Abdichten vorgesehen sein. Beim Aufstecken des Deckels spannt der als erstes Rastmittel 12 ausgebildete Rastvorsprung das Federelement 8 vor, indem der Rastvorsprung beim Aufsetzen des Deckels 6 mit dem in Querrichtung V-förmigen Bereich eines der bogenförmigen Abschnitte 26 derart zusammenwirkt, dass das Federelement 8 in seiner Querrichtung zusammengedrückt wird. In der geschlossenen Stellung des Deckels 6 entspannt sich das Federelement 8 in dessen Querrichtung, und die am Federelement 8 ausgebildeten zweiten Rastmittel 24 wirken mit dem als erstes Rastmittel 12 ausgebildeten Rastvorsprung derart zusammen, dass der Deckel 6 sicher in seiner geschlossenen Stellung gehalten wird und nicht abgezogen werden kann. Beim Einrasten des Federelements 8 tritt ein deutliches Rastgeräusch auf.

Das Federelement 8 weist in seiner Längsrichtung ein bogenförmiges Profil auf, und der zweite Schenkel 4 weist einen im Wesentlichen runden Querschnitt auf. Im geschlossenen Zustand des Deckels 6 ist der innere Bereich der bogenförmigen Abschnitte des Federelements 8 am bzw. um den Außenumfang des zweiten Schenkels 4 angeordnet, wodurch das Federelement 8 platzsparend angeordnet ist. In dieser Stellung ist die Querrichtung des Federelements 8 in der Längsrichtung des zweiten Schenkels 4 gerichtet. Das Federelement 8 weist in seiner Querrichtung eine vergleichsweise große Federlänge auf, wodurch ein großer elastischer Bereich des Federelements 8 erreicht wird und eine plastische Verformung des Federelements 8 vermieden wird.

Ist der Deckel 6 geschlossen, bildet sich zwischen dem Deckel 6 und dem zweiten Schenkel 4 eine Betätigungsöffnung 30, durch die ein Betätigungswerkzeug, beispielsweise ein Schraubendreher, eingeführt werden kann, um die ersten Rastmittel 12 und die zweiten Rastmittel 24 zu entrasten, indem durch eine Druckkraft auf den Betätigungsbereich 22 das Federelement 8 in seiner Querrichtung zusammengedrückt wird. Das Federelement 8 ist zwischen dem Deckel 6 und dem zweiten Schenkel 4 weitgehend staubgeschützt angeordnet.

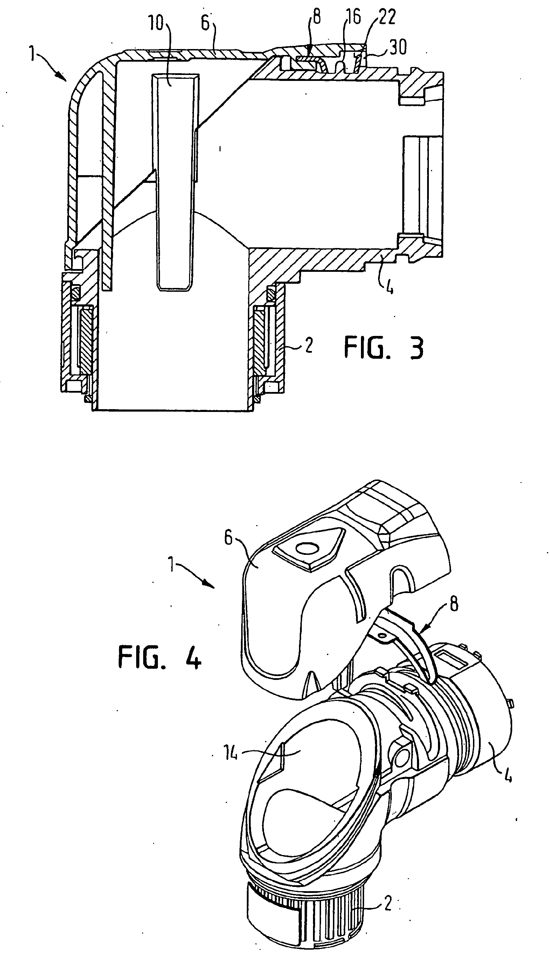

Zum Abnehmen des Deckels 6 wird ein Betätigungswerkzeug, beispielsweise ein Schraubendreher, in die Betätigungsöffnung 30 eingeführt, das gegen den Betätigungsbereich 22 drückt und das Federelement 8 in seiner Querrichtung spannt. An dem zweiten Schenkel 4 ist ein in Figur 3 gezeigter Anschlag 16 vorgesehen, der verhindert, dass das Federelement 8 über seinen elastischen Bereich hinweg zusammengedrückt wird. Durch Spannen des Federelements 8 entrasten die zweiten Rastmittel 24 von den ersten Rastmitteln 12, die in Figur 1 gezeigt sind und durch den Rastvorsprung gebildet sind. Der Deckel 6 kann jetzt von dem Winkelsteckverbindergehäuse 1 abgenommen werden.

Diese Art der Rastung und Entrastung ist besonders verschleißarm, da nur das Federelement 8 zum Rasten und Entrasten verformt wird. Durch den großen elastischen Bereich des Federelements 8 in dessen Querrichtung ergibt sich eine besonders rüttelsichere Rastung des Deckels 6.

Bei dem offenbaren Winkelsteckverbindergehäuse 1 übernehmen die Führungselemente bzw. die komplementären Führungselemente 10 nur die Führungsfunktion, das erste Dichtelement 18 bzw. das zweite Dichtelement 20 nur die Dichtfunktion und die ersten Rastmittel 12 bzw. die zweiten Rastmittel 24 nur die Rastfunktion. Somit sind die Führungselemente bzw. die komplementären Führungselemente 10, das erste Dichtelement 18 bzw. das zweite Dichtelement 20 und die ersten Rastmittel 12 bzw. die zweiten Rastmittel 24 optimiert ausgebildet bzw. für ihre jeweilige Funktion optimiert. Dadurch ergibt sich ein rüttelsicheres, temperaturunempfindliches, alterungsbeständiges und verschleißarmes Winkelsteckverbindergehäuse 1.

## Patentansprüche

1. Winkelsteckverbindergehäuse (1), mit
- einem ersten Schenkel (2);
- einem zum ersten Schenkel (2) winklig angeordneten zweiten Schenkel (4);
- einer Öffnung (14), die an mindestens einem der Schenkel (2, 4) gebildet ist;
- ersten Rastmitteln (12);
- einem Deckel (6) zum Schließen der Öffnung (14);
- einem Führungselement, das an mindestens einem der Schenkel (2, 4) gebildet ist;
- einem komplementären Führungselement (10), das an dem Deckel (6) gebildet ist; und
- einem Federelement (8) mit zweiten Rastmitteln (24), das in der geschlossenen Stellung des Deckels (6) zwischen dem Deckel (6) und mindestens einem der Schenkel (2, 4) vorgesehen ist, wobei
- sich beim Aufsetzen des Deckels (6) das Federelement (8) in einem Zustand höherer Federspannung befindet und
- das Führungselement und das komplementäre Führungselement (10) den Deckel (6) beim Schließen derart führen, dass
- in der geschlossenen Stellung des Deckels (6) die ersten Rastmittel (12) und die zweiten Rastmittel (24) derart zusammenwirken, dass sie den Deckel (6) in der geschlossenen Stellung halten und sich das Federelement (8) in einem Zustand niedrigerer Federspannung befindet,
**dadurch gekennzeichnet, dass**
- das Federelement (8) an der Deckelunterseite angeordnet ist, die ersten Rastmittel (12) an mindestens einem der Schenkel (2, 4) gebildet sind und in der geschlossenen Stellung des Deckels (6) das Federelement (8) und die ersten Rastmittel (12) zwischen dem Deckel (6) und einem der Schenkel (2, 4) vorgesehen sind;
- im geschlossenen Zustand des Deckels (6) das Federelement (8) um mindestens einen Schenkel (2, 4) vor Verschmutzung geschützt und außerhalb der Öffnung (14) angeordnet ist; und
- zwischen dem Deckel (6) und einem der Schenkel (2, 4) eine Betätigungsöffnung (30) vorgesehen ist, durch die ein Betätigungswerkzeug eingeführt werden kann, um das Federelement (8) in einen Zustand zu bringen, in dem sich die zweiten Rastmittel (24) von den ersten Rastmitteln (12) lösen.

2. Winkelsteckverbindergehäuse nach Anspruch 1, **dadurch gekennzeichnet, dass** das Winkelsteckverbindergehäuse (1) ein erstes Dichtelement (18), das an mindestens einem der Schenkel (2, 4) angeordnet ist, und ein zweites Dichtelement (20), das am Deckel (6) angeordnet ist, umfasst, wobei das Führungselement und das komplementäre Führungselement (10) derart zusammenwirken, dass das erste Dichtelement (18) und das zweite Dichtelement (20) die Öffnung (14) in der geschlossenen Stellung des Deckels (6) abdichten.

3. Winkelsteckverbindergehäuse nach Anspruch 2, **dadurch gekennzeichnet, dass** das erste Dichtelement (18) integral mit mindestens einem der Schenkel (2, 4) und/oder das zweite Dichtelement (20) integral mit dem Deckel (6) ausgebildet ist.

4. Winkelsteckverbindergehäuse nach einem der Ansprüche 1 bis 3, **dadurch gekennzeichnet, dass** mindestens einer der Schenkel (2, 4) eine Mehrzahl von Führungselementen umfasst und der Deckel (6) eine Mehrzahl von komplementären Führungselementen (10) umfasst, wobei die Mehrzahl von Führungselementen mit der Mehrzahl von komplementären Führungselementen (10) zusammenwirkt, um den Deckel (6) beim Schließen zu führen.

5. Winkelsteckverbindergehäuse nach einem der Ansprüche 2 bis 4, **dadurch gekennzeichnet, dass** das Federelement (8) außerhalb des durch das erste Dichtelement (18) und das zweite Dichtelement (20) definierten Bereichs vorgesehen ist.

6. Winkelsteckverbindergehäuse nach einem der Ansprüche 1 bis 5, **dadurch gekennzeichnet, dass** sich das mindestens eine Führungselement entlang eines der Schenkel (2, 4) in dessen Längsrichtung erstreckt.

7. Winkelsteckverbindergehäuse nach einem der Ansprüche 2 bis 6, **dadurch gekennzeichnet, dass** das mindestens eine Führungselement und das mindestens eine komplementäre Führungselement (10) innerhalb des durch das erste Dichtelement (18) und das zweite Dichtelement (20) definierten Bereichs vorgesehen sind.

8. Winkelsteckverbindergehäuse nach einem der Ansprüche 1 bis 7, **dadurch gekennzeichnet, dass** das mindestens eine Führungselement innerhalb des durch die Öffnung (14) definierten Bereichs ausgebildet sind, so dass sich in der geschlossenen Stellung des Deckels (6) das mindestens eine komplementäre Führungselement (10) durch die Öffnung (14) erstreckt.

9. Winkelsteckverbindergehäuse nach einem der Ansprüche 1 bis 8, **dadurch gekennzeichnet, dass** das mindestens eine komplementäre Führungselement (10) nicht mit der Öffnung (14) zusammenwirkt.

10. Winkelsteckverbindergehäuse nach einem der Ansprüche 1 bis 9, **dadurch gekennzeichnet, dass** das mindestens eine Führungselement als Führungsnut ausgebildet ist und das mindestens eine komplementäre Führungselement (10) als Führungssteg ausgebildet ist.

11. Winkelsteckverbindergehäuse nach einem der Ansprüche 1 bis 10, **dadurch gekennzeichnet, dass** sich die Öffnung (14) in einem Übergangsbereich vom ersten Schenkel (2) zum zweiten Schenkel (4) befindet.

12. Winkelsteckverbindergehäuse nach Anspruch 11, **dadurch gekennzeichnet, dass** die Öffnung (14) in einem zwischen den Schenkeln (2, 4) im Längsschnitt des Winkelsteckverbindergehäuses (1) schräg verlaufenden Bereich gebildet ist.

13. Winkelsteckverbindergehäuse nach einem der Ansprüche 1 bis 12, **dadurch gekennzeichnet, dass** sich das mindestens eine Führungselement im Innern eines der Schenkel (2,4) in dessen Längsrichtung erstreckt.

14. Winkeisteckverbindergehäuse nach einem der Ansprüche 1 bis 13, **dadurch gekennzeichnet, dass** das mindestens eine Führungselement integral mit dem Innenumfang mindestens eines der Schenkel (2, 4) ausgebildet ist.

15. Winkelsteckverbindergehäuse nach einem der Ansprüche 1 bis 14, **dadurch gekennzeichnet, dass** das Federelement (8) einen ersten bogenförmigen Abschnitt (26) und einen zweiten bogenförmigen Abschnitt (26) umfasst, die je in der Längsrichtung des Federelements (8) ausgebildet sind und an ihren Bogenenden durch eine Biegung (28) derart verbunden sind, dass das Federelement (8) in der Querrichtung ein V-förmiges Profil aufweist.

16. Winkelsteckverbindergehäuse nach Anspruch 15, **dadurch gekennzeichnet, dass** ein Betätigungsbereich (22) des Federelements (8) zwischen den Bogenenden eines der bogenförmigen Abschnitte angeordnet ist.

17. Winkelsteckverbindergehäuse nach Anspruch 16, **dadurch gekennzeichnet, dass** das Federelement (8) an einem der bogenförmigen Abschnitte in Bogenaußenrichtung einen geraden Bereich umfasst, an dem die zweiten Rastmittel (24) und der Betätigungsbereich (22) ausgebildet sind.

18. Winkelsteckverbindergehäuse nach einem der Ansprüche 16 bis 17, **dadurch gekennzeichnet, dass** das Winkelsteckverbindergehäuse (1) derart ausgebildet ist, dass durch Drücken auf den Betätigungsbereich (22) des Federelements (8) die ersten Rastmittel (12) und die zweiten Rastmittel (24) voneinander gelöst werden.

19. Winkelsteckverbindergehäuse nach einem der Ansprüche 1 bis 18, **dadurch gekennzeichnet, dass** im geschlossenen Zustand des Deckels (6) der innere Bereich der bogenförmigen Abschnitte des Federelements (8) um mindestens einen Schenkel (2, 4) angeordnet ist.

20. Winkelsteckverbindergehäuse nach einem der Ansprüche 2 bis 19, **dadurch gekennzeichnet, dass** in der geschlossenen Stellung des Deckels (6) das erste Dichtelement (18) mit dem zweiten Dichtelement (20) derart zusammenwirkt, dass die Öffnung (14) zumindest staubdicht abgedichtet ist.

## Claims

1. Angular plug-in connector housing (1), comprising
- a first leg (2);
- a second leg (4) disposed at an angle to the first leg (2);
- an opening (14) formed on at least one of the legs (2, 4);
- first locking means (12)
- a cover (6) for closing the opening (14);
- a guiding element formed on at least one of the legs (2, 4);
- a complementary guiding element (10) formed on the cover (6); and
- a spring element (8) with two locking means (24), which is provided between the cover (6) and at least one of the legs (2, 4) in the closed position of the cover (6), wherein
- when the cover (6) is put in place the spring element (8) is in a state of higher spring tension and
- the guiding element and the complementary guiding element (10) guide the cover (6) in such a manner when it is being closed that
- in the closed position of the cover (6) the first locking means (12) and the second locking means (24) cooperate in such a manner that they keep the cover (6) in the closed position and the spring element (8) is in a state of low spring tension,
**characterized in that**
- the spring element (8) is disposed on the underside of the cover, the first locking means (12) are provided on at least one of the legs (2, 4) and, in the closed position of the cover (6), the spring element (8) and the first locking means (12) are provided between the cover (6) and one of the legs (2, 4);
- in the closed state of the cover (6), the spring element (8) is disposed about at least one leg (2, 4) so as to be protected against soiling and outside the opening (14); and
- an actuating opening (30) is provided between the cover (6) and one of the legs (2, 4) through which an actuating tool can be inserted to bring the spring element (8) in a state in which the second locking means (24) release the first locking means (12).

2. Angular plug-in connector housing according to claim 1, **characterized in that** the angular plug-in connector housing (1) comprises a first seal element (18) disposed on at least one of the legs (2, 4), and a second seal element (20) disposed on the cover (6), the guiding element and the complementary guiding element (10) interacting in such a manner that the first seal element (18) and the second seal element (20) seal the opening (14) in the closed position of the cover (6).

3. Angular plug-in connector housing according to claim 2, **characterized in that** the first seal element (18) is integral with at least one of the legs (2, 4) and/or the second seal element (20) is integral with the cover (6).

4. Angular plug-in connector housing according to one of claims 1 to 3, **characterized in that** at least one of the legs (2, 4) comprises a plurality of guiding elements and the cover (6) comprises a plurality of complementary guiding elements (10), the plurality of guiding elements interacting with the plurality of complementary guiding elements (10) to guide the cover (6) during closing.

5. Angular plug-in connector housing according to one of claims 2 to 4, **characterized in that** the spring element (8) is provided outside the area defined by the first seal element (18) and the second seal element (20).

6. Angular plug-in connector housing according to one of claims 1 to 5, **characterized in that** the at least one guiding element extends along one of the legs (2, 4) in the longitudinal direction thereof.

7. Angular plug-in connector housing according to one of claims 2 to 6, **characterized in that** the at least one guiding element and the at least one complementary guiding element (10) are provided within the area defined by the first seal element (18) and the second seal element (20).

8. Angular plug-in connector housing according to one of claims 1 to 7, **characterized in that** the at least one guiding element is provided within the area defined by the opening (14) so that in the closed position of the cover (6) the at least one complementary guiding element (10) extends through the opening (14).

9. Angular plug-in connector housing according to one of claims 1 to 8, **characterized in that** the at least one complementary guiding element (10) does not interact with the opening (14).

10. Angular plug-in connector housing according to one of claims 1 to 9, **characterized in that** the at least one guiding element is designed as a guiding groove and the at least one complementary guiding element (10) as a guiding web.

11. Angular plug-in connector housing according to one of claims 1 to 10, **characterized in that** the opening (14) is located in an area of transition from the first leg (2) to the second leg (4).

12. Angular plug-in connector housing according to claim 11, **characterized in that** the opening (14) is provided in an area extending obliquely between the legs (2, 4) in the longitudinal section of the angular plug-in connector housing (1).

13. Angular plug-in connector housing according to one of claims 1 to 12, **characterized in that** the at least guiding element extends in the interior of one of the legs (2, 4) in the longitudinal direction thereof.

14. Angular plug-in connector housing according to one of claims 1 to 13, **characterized in that** the at least one guiding element is formed integrally with the inner circumference of at least one of the legs (2, 4).

15. Angular plug-in connector housing according to one of claims 1 to 14, **characterized in that** the spring element (8) has a first arched section (26) and a second arched section (26), each being designed in the longitudinal direction of the spring element (8) and being connected at the arch ends by a bend (28) in such a manner that the spring element (8) has a V-shaped profile in the transverse direction.

16. Angular plug-in connector housing according to claim 15, **characterized in that** an actuating region (22) of the spring element (8) is arranged between the arch ends of one of the arched sections.

17. Angular plug-in connector housing according to claim 16, **characterized in that** the spring element (8) comprises a straight area, at which the second locking means (24) and the actuating region (22) are formed, on one of the arched sections in the outer direction of the arch.

18. Angular plug-in connector housing according to one of claims 16 to 17, **characterized in that** the angular plug-in connector housing (1) is designed such the first locking means (12) and the second locking means (24) are detached from each other by pressing the actuating region (22) of the spring element.

19. Angular plug-in connector housing according to one of claims 1 to 18, **characterized in that** the inner region of the arched section of the spring element (8) is disposed about at least one leg (2, 4) when the cover (6) is in the closed state.

20. Angular plug-in connector housing according to one of claims 2 to 19, **characterized in that** the first seal element (18) interacts with the second seal element (20) such that the opening (14) is at least sealed in dust-tight manner when the cover (6) is in the closed position.

## Revendications

1. Boîtier de connecteur angulaire (1), comprenant
- une première branche (2),
- une deuxième branche (4) placée angulairement par rapport à la première branche (2)
- une ouverture (14) qui est formée sur au moins une des branches (2, 4),
- des premiers moyens d'encliquetage (12),
- un couvercle (6) pour refermer l'ouverture (14),
- un élément de guidage qui est formée sur au moins une des branches (2, 4),
- un élément de guidage complémentaire (10) qui est formé sur le couvercle (6), et
- un élément à ressort (8) muni de deuxièmes moyens d'encliquetage (24) qui, dans la position fermée du couvercle (6), sont prévus entre le couvercle (6) et au moins une des branches (2, 4), où
- lors de la mise en place du couvercle (6), l'élément ressort (8) se trouve dans un état de tension plus élevée et
- l'élément de guidage et l'élément de guidage complémentaire (10) guident le couvercle (6) lors de sa fermeture de telle sorte que
- dans la position fermée du couvercle (6), les premiers moyens d'encliquetage (12) et les deuxièmes moyens d'encliquetage (24) interagissent de telle sorte qu'ils maintiennent le couvercle (6) dans la position fermée et que l'élément ressort (8) se trouve dans un état de tension plus faible,
**caractérisé en ce que**
- l'élément ressort (8) est placé sous la face inférieure du couvercle, les premiers moyens d'encliquetage (12) sont formés sur au moins une des branches (2, 4) et, dans la position fermée du couvercle (6), l'élément ressort (8) et les premiers moyens d'encliquetage (12) sont prévus entre le couvercle (6) et une des branches (2, 4),
- à l'état fermé du couvercle (6), l'élément ressort (8) sur au moins une branche (2, 4) est protégé contre la salissure et placé en dehors de l'ouverture (14), et **en ce que**
- il est prévu entre le couvercle (6) et une des branches (2, 4) une ouverture d'actionnement (30) à travers laquelle un outil d'actionnement peut être introduit afin d'amener l'élément ressort (8) dans un état dans lequel les deuxièmes moyens d'encliquetage (24) se détacheront des premiers moyens d'encliquetage (12).

2. Boîtier de connecteur angulaire selon la revendication 1, **caractérisé en ce que** le boîtier de connecteur angulaire (1) comprend un premier élément d'étanchéité (18), qui est placé sur au moins une des branches (2, 4), et un deuxième élément d'étanchéité (20) qui est placé sur le couvercle (6), l'élément de guidage et l'élément de guidage complémentaire (10) interagissant de telle sorte que le premier élément d'étanchéité (18) et le deuxième élément d'étanchéité (20) étanchent l'ouverture (14) dans la position fermée du couvercle (6).

3. Boîtier de connecteur angulaire selon la revendication 2, **caractérisé en ce que** le premier élément d'étanchéité (18) est formé solidaire d'au moins une des branches (2, 4) et/ou le deuxième élément d'étanchéité (20) est formé solidaire du couvercle (6).

4. Boîtier de connecteur angulaire selon l'une des revendications 1 à 3, **caractérisé en ce que** au moins une des branches (2, 4) comprend une multiplicité d'éléments de guidage et le couvercle (6) comprend une multiplicité d'éléments de guidage complémentaires (10), la multiplicité d'éléments de guidage interagissant avec la multiplicité d'éléments de guidage complémentaires (10) pour guider le couvercle (6) lors de sa fermeture.

5. Boîtier de connecteur angulaire selon l'une des revendications 2 à 4, **caractérisé en ce que** l'élément ressort (8) est prévu en dehors de la zone définie par le premier élément d'étanchéité (18) et par le deuxième élément d'étanchéité (20).

6. Boîtier de connecteur angulaire selon l'une des revendications 1 à 5, **caractérisé en ce que** au moins un des éléments de guidage s'étend le long d'une des branches (2, 4) dans son sens longitudinal.

7. Boîtier de connecteur angulaire selon l'une des revendications 2 à 6, **caractérisé en ce que** au moins un des éléments de guidage et au moins un des éléments de guidage complémentaires (10) sont prévus à l'intérieur de la zone définie par le premier élément d'étanchéité (18) et par le deuxième élément d'étanchéité (20).

8. Boîtier de connecteur angulaire selon l'une des revendications 1 à 7, **caractérisé en ce que** au moins un des éléments de guidage est formé à l'intérieur de la zone définie par l'ouverture (14) si bien que, dans la position fermée du couvercle (6), au moins un des éléments de guidage complémentaires (10) s'étend à travers l'ouverture (14).

9. Boîtier de connecteur angulaire selon l'une des revendications 1 à 8, **caractérisé en ce que** au moins un des éléments de guidage complémentaires (10) n'interagit pas avec l'ouverture (14).

10. Boîtier de connecteur angulaire selon l'une des revendications 1 à 9, **caractérisé en ce que** au moins un des éléments de guidage est conçu sous forme de rainure de guidage, et au moins un des éléments de guidage complémentaires (10), sous forme de barrette de guidage.

11. Boîtier de connecteur angulaire selon l'une des revendications 1 à 10, **caractérisé en ce que** l'ouverture (14) se trouve dans une zone de transition comprise entre la première branche (2) et la deuxième branche (4).

12. Boîtier de connecteur angulaire selon la revendication 11, **caractérisé en ce que** l'ouverture (14) est formée dans une zone s'étendant obliquement entre les branches (2, 4) en coupe longitudinale du boîtier de connecteur angulaire (1).

13. Boîtier de connecteur angulaire selon l'une des revendications 1 à 12, **caractérisé en ce que** au moins un des éléments de guidage s'étend à l'intérieur d'une des branches (2, 4) dans son sens longitudinal.

14. Boîtier de connecteur angulaire selon l'une des revendications 1 à 13, **caractérisé en ce que** au moins un des éléments de guidage est formé solidaire de la circonférence intérieure d'au moins une des branches (2, 4).

15. Boîtier de connecteur angulaire selon l'une des revendications 1 à 14, **caractérisé en ce que** l'élément ressort (8) comprend un premier secteur arqué (26) et un deuxième secteur arqué (26) qui sont formés chacun dans le sens longitudinal de l'élément ressort (8) et sont reliés de telle sorte par une courbure (28) à leurs extrémités que l'élément ressort (8) présente un profil en V dans le sens transversal.

16. Boîtier de connecteur angulaire selon la revendication 15, **caractérisé en ce qu'**une zone d'actionnement (22) de l'élément ressort (8) est placée entre les extrémités de l'un des segments arqués.

17. Boîtier de connecteur angulaire selon la revendication 16, **caractérisé en ce que** l'élément ressort (8) présente sur l'un des segments arqués, sur la périphérie externe de l'arc, une zone droite sur laquelle sont réalisés les deuxièmes moyens d'encliquetage (24) et la zone d'actionnement (22).

18. Boîtier de connecteur angulaire selon l'une des revendications 16 à 17, **caractérisé en ce que** le boîtier de connecteur angulaire (1) est conçu de telle sorte qu'une pression exercée sur la zone d'actionnement (22) de l'élément ressort (8) fait se détacher les uns des autres les premiers moyens d'encliquetage (12) et les deuxièmes moyens d'encliquetage (24).

19. Boîtier de connecteur angulaire selon l'une des revendications 1 à 18, **caractérisé en ce que**, à l'état fermé du couvercle (6), la zone intérieure des segments arqués de l'élément ressort (8) est disposée autour d'au moins une branche (2, 4).

20. Boîtier de connecteur angulaire selon l'une des revendications 2 à 19, **caractérisé en ce que**, dans la position fermée du couvercle (6), le premier élément d'étanchéité (18) interagit de telle sorte avec le deuxième élément d'étanchéité (20) que l'ouverture (14) est rendue étanche pour le moins contre la poussière.
